# EUROPEAN PATENT APPLICATION

(11) **EP 3 018 580 A1**
(43) Date of publication of application: **11.05.2016**
(21) Application number: 14290331.9
(22) Date of filing: 06.11.2014
(51) Int. Cl.: G06F 9/445, G06F 17/30, H04L 29/08

(54) **Cache server and method for serving and caching web resources**

(71) Applicant: ALCATEL LUCENT, 92100 Boulogne-Billancourt (FR)
(72) Inventor: Van Broeck, Sigurd, 2018 Antwerp (BE); Verzijp, Nico Victor, 2018 Antwerp (BE)
(74) Representative: Plas, Axel Ivo Michel

(57) **Abstract**

According to a first aspect, the invention relates to a cache server (12) for serving and caching web resources from one or more source web servers (13) towards one or more user agents (11). The server (12) comprises a protocol handler (20), which is configured to exchange requests for web resources and responses comprising the web resources, with the user agents (11) and the one or more source web servers (13). The protocol handler (20) is configured to issue a cache request for the web resources to a cache handler (21) upon reception of a request from a user agent (11). The cache server (12) further comprises the cache handler (21), which is configured to cache the web resources received by the protocol handler (20) from the one or more source web servers (13) into a memory store (24-27) as cached web resources. The cache handler (21) is configured to retrieve the cached web resources from the memory store (24-27) in response to the request. The server (12) comprises the memory store (24-27) for storing the cached web resources. The cache handler (21) is further adapted to identify and extract information on linked web resources (40-42,50-52,94-96) from a web resource received from said protocol handler (20). The cache handler (21) is further adapted to generate a web resource reference file (44,53,98), comprising links to the linked web resources (40-42,50-52,94-96). The memory store (24-27) is further adapted to store the web resource reference file (44,53,98).

## Description

### Technical Field

The present disclosure generally relates to the field of caching of web resources for delivery to user agents running on a client device. Web resources are data items made available by a source or origin server over a data network to the user agent.

More particular, the disclosure relates to the caching of these web resources in cache servers which are located between the user agent and the source or origin servers in the data network.

### Background

Web applications are interactive web content and represent the majority of web pages available today on the Internet. Web applications are a combination of multiple individual web resources like HTML, CSS, JavaScript or ECMAScript, SVG or Scalable Vector Graphics, images, videos, audio and other files. Web applications may refer to a complete interactive application but also to a "web library", "a widget", a "web component", a "web bundle", or any other (logical) assembly of web resources. In order to provide the user a good and fluent web experience, these web resources should arrive at the user agent as fast as possible.

An already broadly implemented solution to reduce the latency is by the use of intermediaries, which are delivery appliances that are placed closer to the user agent in the data network. These appliances cache the web resources locally and can deliver them faster to the user agent compared to resources coming from the source server. Such appliances are also referred to as cache servers as they locally store copies of the web resources. The concept of cache servers has been further developed and nowadays most of the internet content is served by Content Delivery Networks or CDNs.

Another common technique for reducing latency is by reducing the number of requests for web resources. In the HTTP1.x protocol this is achieved by in-lining or concatenation of web resources into a single web resource at the side of the source server. At the user agent side, Front-End Optimization or FEO tools, such as Radware from FastView, may then add additional code to the web page that decomposes the concatenated web resource into its original web resources.

The HTTP2.0 protocol offers a solution to reduce latency by allowing the source server or intermediaries to specify a list of pushed web resources. On request of a single web resource by a user agent, multiple other web resources may thus be pushed to the user agent thereby avoiding further requests for these other web resources.

### Summary

It is an object to provide a cache server and method for serving and caching web resources that is more performant than existing caches. More particularly, it is an objective to disclose a cache server that is more efficient in terms of latency and/or memory usage.

This object is achieved by a cache server for serving and caching web resources from one or more source web servers towards one or more user agents. The server comprises a protocol handler, which is configured to exchange requests for web resources and responses comprising the web resources, with the user agents and the one or more source web servers. The protocol handler is configured to issue a cache request for the web resources to a cache handler upon reception of a request from a user agent. The cache server further comprises the cache handler, which is configured to cache the web resources received by the protocol handler from the one or more source web servers into a memory store as cached web resources. The cache handler is configured to retrieve the cached web resources from the memory store in response to the request. The server comprises the memory store for storing the cached web resources. The cache handler is further adapted to identify and extract information on linked web resources from a web resource received from the protocol handler. The cache handler is adapted to generate a web resource reference file, comprising links to the linked web resources. This memory store is further adapted to store the web resource reference file.

As the cache handler identifies and extracts information on linked web resources, dependency information can be stored on the cache server. Dependent web resources are listed or referred to in a reference file, which is created and stored by the cache handler in the memory store. As the intermediary server or cache server can be aware of web resource dependencies, a higher cache efficiency can be achieved.

Storing reference files on the cache server allows for an improved caching of web resources and a quicker availability of dependent content to the user agent. This content can be provided in full, e.g. sending all dependent web resources corresponding to a web application in line, but also individual web resources can be provided quicker. Hereby, latency can be reduced as the amount of requests to a source or origin server can be decreased.

The cache server can also keep track of eventual duplicate web resources in memory. Keeping track of dependencies in such web resource reference files, allows for a more efficient allocation of memory for web resources in a cache server, as duplicated storage of web resources can be tracked, reduced and/or avoided. As an example, a web resource that can be requested and consumed individually, but which can also be consumed as part of a bigger container resource, can be stored once instead of twice in the cache. The web resource reference file of the container resource enables to identify and retrieve the single stored copy of the web resource, also in case a request for the container resource is received.

Examples of web resources containing dependency information on linked web resources are downloadable package files, streamable package files, manifest files, etc.

The term "cache server" in underlying disclosure should be understood as an intermediary network server or delivery appliance suitable to cache web resources from a source or other intermediary server and is suitable to deliver web resources to a user agent or software agent. This user agent acts as a client on behalf of a user in a network protocol (e.g. HTTP1.x, HTTP2, etc.) within a client-server distribution system.

The term "web resource" in underlying disclosure should be understood as an object or element which can be part of a web application, web page, etc. Examples are inter alia HTML, CSS, JavaScript or ECMAScript, SVG or Scalable Vector Graphics, images, videos, audio, etc.

The term "information on linked web resources" in underlying disclosure should be understood as dependency information of multiple web resources being part of a common application.

The term "link to linked web resources" in underlying disclosure should be understood as a reference or identification for retrieving a specific web resource, e.g. in memory store. A link could be a cache location, file name, etc.

The term "generate" in underlying disclosure should be understood as the creation of a web resource reference file, but also the adoption or copying of a file, which contains links to linked web resources.

According to an embodiment, the cache handler is further adapted to receive a request from the protocol handler for a first linked web resource listed in a first web resource reference file in the memory store. The cache handler is further adapted to identify a set of one or more second linked web resources referred to in the first web resource reference file and which are available in the memory store. The cache handler is further adapted to provide the first linked web resource and the set of one or more second linked web resources to the protocol handler for further delivery towards a user agent.

The cache server is able to determine dependant or concatenated web resources by a web resource reference file, which is kept in the memory store of the cache server. As this file comprises references or links to mutually linked web resources, the cache server can provide dependent web resources to the user agent based on a first requested web resource. Hereby, latency will be reduced compared to the retrieval of web resources stored at the source server.

According to an embodiment, the cache handler is adapted to identify the received web resources as containing information on linked web resources according to a media type field in the received web resource.

According to an embodiment, the protocol handler is further adapted to receive a request for the first linked web resource from a user agent, send the first linked web resource as a response to the user agent and push the set of one or more second linked web resources towards the user agent.

Pushing dependent web resources to the user agent, allows a quicker delivery of web resources whereby latency can be reduced for the dependent web resources.

According to an embodiment, the cache handler is further adapted to request the protocol handler to retrieve one or more missing web resources in the memory store that are referred to by a web resource reference file in the memory store, and is adapted to store the one or more missing web resources in the memory store.

When web resources that are referred to in a reference file in memory store are missing, the cache handler can request the protocol handler to retrieve these missing web resources, e.g. at a source server. This improves the availability of dependent web resources at the cache server.

According to an embodiment, the cache handler is further adapted to periodically check a time to live of cached web resources that are referred to by web resource reference files in the memory store, is adapted to identify whether updated web resources are available, and is adapted to pre-fetch the updated web resources by the protocol handler.

The term "time to live" in underlying disclosure should be understood as a counter or timestamp representing the lifespan or lifetime of a web resource.

The cache handler can periodically check the time to live (TTL) from the web resources listed in the cached reference files. In case it encounters an expired web resource, it can pre-fetch it again from the origin server. As such, the web resources that are semi-permanently cached can be guaranteed to be up-to-date. Possibly, the cache handler will only retrieve a fresh instance when the web resource is requested frequently, e.g. based on a frequency threshold. Possibly, the threshold is configurable as a system variable or as a web application variable. Optionally, the threshold can be added as extra metadata to the reference file on a per web resource basis.

According to an embodiment, the cache handler is further adapted to exclude cached web resources from purging and/or refreshing when cached web resources are linked,to by web resource reference files in the memory store.

Regularly cached web objects (located in the memory store) can be linked to the reference file. Once an object is linked to a reference file, it gets excluded for regular cache purging or refreshing cycles. Hereby, all web resources listed in the reference file are available, even in case the source server is off-line, as the cache server will have all required web resources in its cache. This way the cache and its dependent web resources can be seen as semi-permanent cache.

According to an embodiment, the cache handler further comprises an administrator handler adapted to pre-install and/or administer web resource reference files and linked web resources in the memory store.

The term "adapted to administer" in underlying disclosure should be understood as the ability of the cache handler to create, to add, to edit and/or to remove web resource reference files and linked web resources in the memory store.

According to an embodiment, the web resource reference file concerns a web application manifest file.

The term "manifest file" in underlying disclosure should be understood as a cache file containing information on dependent web resources for a web application, which is suitable to be stored in local cache at the user agent.

According to an embodiment, the cache handler comprises a manifest handler configured to identify a web application manifest file from web resources received from the protocol handler and configured to store the web application manifest file in the memory store, wherein the web application manifest file concerns a web resource reference file.

According to an embodiment, the manifest handler is adapted to decompose a packaged web resource in order to retrieve a web application manifest file in the unpackaged web resources.

According to an embodiment, the manifest handler is adapted to identify the received web resources as web application manifest files according to a media type field in the received web resources.

According to an embodiment, the manifest handler is adapted to parse web page web resources in search of links to linked web application manifest files, is adapted to retrieve the linked manifest files via the protocol handler, and is adapted to store the linked manifest files in the memory store.

By pre-fetching dependent web resources, web resources can be available even before the user agent requests them. The user agent first would need to receive the manifest file, then start parsing the file before the agent could start requesting the Web resources. Alternatively, the user agent would need to receive the HTML, CSS, and JavaScript files, during which the agent would start parsing these files before web resources of which several will be listed in the manifest file could be requested.

According to an embodiment, the cache server further comprises a package handler for handling web resources of a web application package type. This package handler is further adapted to decompose a first web resource of a web application package type into a first web application package description and one or more first linked web resources. The package handler is further adapted to cache the first web application package description and the one or more first linked web resources in the memory store. Hence, the web application package description concerns a web resource reference file.

The term "web application package" in underlying disclosure should be understood as a package file containing web resources for a local web application installation. A web application can also be hosted on a network server. When used from the same type of end-device, the web resources needed for both packaged or hosted web application would be significantly identical.

The web application package provides the complete list of Web resources required to install and run the web application. For example, HTML5 introduced several incarnations of web application "packages" for permanent storage of a set of web resources on the user's device. Such packages are typically created by the web application author or authoring tool. The package is typically used to permanently install a web application on a device, similar to the installation of native applications from app stores.

The format of the package can be specified in e.g. an index record format, such as ZIP format or a one-by-one streamed format, such as the Streamable Package Format (SPF). The former format requires a complete download of the package before the web application is able to run while the latter format provides the web resources one at the time enabling the web application to already start as soon as a minimum set of web resources has been received in the user agent.

An SPF-file is comprised of a number of parts, separated by boundaries. Each part comprises a header and a body. The header of a part follows the same syntax as the header for an HTTP response, and can re-use any HTTP header. Possible header fields are e.g. "Content-Type", "Content-Location" and "Link". Field "Content-Type" refers to a "media type". The field "Content-Location" refers to a URL of a web resource which can be used in the request from a user agent. An SPF-file also can comprise a package header containing metadata (e.g. index) about the package.

By extracting a package description and using this information as dependency information, the cache server can keep track of eventual duplicate web resources in memory. Keeping track of dependencies in such web resource reference files, allows for a more efficient allocation of memory for web resources in a cache server, as duplicated storage of web resources can be tracked, reduced and/or avoided. A single web resource containing in-lined or concatenated web resources could be cached in the cache server together with the concatenated web resources resulting in a duplication used storage. So this decomposition allows the detection of web resources in packaged and non-packaged format, whereby only a single copy for both is cached. Hereby memory space is reduced. Also, web resources from non-installable web applications that happen to be identical to the web resources stored in the memory store of the cache server should not be duplicated. The individual parts or web resources available in the memory store can be used e.g. when a user is accessing the hosted version of the corresponding web application. Also, it may be that a user previously accessed the hosted version. In that case, all parts are most probably already present in the memory store. The request for the package in that case will only result in the package description being added in the memory store.

According to an embodiment, the package handler is further adapted to reconstruct a second web resource of a web application package type from a second web application package description and one or more second linked web resources upon a cache request from the protocol handler for the one or more second web resources.

According to an embodiment, the cache handler is further adapted to inspect a media type field of a received web resource in order to determine whether the web resource is of the web application package type and whether the web resource is to be handled by the package handler.

According to an embodiment, the package handler is further adapted to identify one or more third web resources in the cache memory store which correspond to a third web application package and which are not linked to a web application package description. The package handler is adapted to create a third web application package description in the cache memory store comprising links to the one or more third web resources.

For example, where no package file is available for a given web application, the package handler can create a package file autonomously by using dedicated tools. Optionally, the package handler can create a package file by comparing and intelligently interpreting the set of web resources for a same URL request from two or more user agents at one or more different moments in time.

According to an embodiment, the one or more third web resources is to be requested by a predefined number of user agents.

According to an embodiment, the package handler is further adapted to decompose a fourth web resource of a first web application package type and to reconstruct the fourth web resource into a second web application package type different to the first web application package type.

For example, the cache server can supply an available ZIP package as a Streamable Package Format to the user agent. The package handler will therefore also create a web application package description. Possibly, the package handler can have ordering means to determine the order to provide or stream web resources. This could for example be based on available information and/or methods like the HAR waterfall(s), the manifest file(s), heuristics, and artificial intelligence.

According to an embodiment, the first web application package type format is a ZIP package format and the second web application package type format is a Streamable Package Format or SPF.

According to an embodiment, the cache server optionally provides installation of a package on the user's device. This could for example be possible by inserting an install function in a HTML response. As such, a user encountering an installable web application by browsing, will be able to save the web application on his device. In such case, the user agent will move the web resources from local cache or semi-permanent storage to permanent storage:

According to an embodiment, the cache handler is further adapted to push one or more fifth web resources from the memory store of the cache server to a user agent, which one or more fifth web resources correspond to a fifth web application package.

The cache server can for instance send a push promise (e.g. HTTP2 push_promise frame) for sending web resources towards a user agent, when the user requests for the fifth web application package or a first web resource of the package.

According to an embodiment, the cache server is further adapted to cancel delivery of one or more sixth web resources from an origin server towards the cache server, which one or more sixth web resources are available in memory store of the cache server.

In a second aspect, the disclosure relates to a method for serving and caching web resources from one or more source web servers towards user agents, the method comprising the exchanging requests for web resources and responses comprising the web resources, with the user agents and the one or more source web servers. The method further comprises the issuing of cache requests for the web resources upon reception of a request from a user agent. The method further comprises the caching of the web resources from the one or more source web servers as cached web resources and the retrieving of the cached web resources in response to the request. The method further comprises the identifying and extracting of information on linked web resources from a received web resource and the storing of a web resource reference file comprising links to linked web resources.

According to an embodiment, the method further comprises the receiving of a request for a first linked web resource listed in a stored first web resource reference file. The method also comprises the identification of a set of one or more second linked web resources referred to in the first web resource reference file and which are available. The method further comprises the delivering of the first linked web resource and the set of one or more second linked web resources towards a user agent.

According to an embodiment, the method further comprises the handling of web resources of a web application package type, by decomposing a first web resource of a web application package type into a first web application package description and one or more first linked web resources. The method further comprises the caching of the first web application package description and the one or more first linked web resources, wherein the web application package description comprises links to the one or more first linked web resources.

### Brief Description of the Drawings

Fig. 1 illustrates a schematic view on a content delivery chain according to an embodiment of underlying disclosure.
Fig. 2 illustrates a schematic view on a cache server, according to an embodiment of underlying disclosure.
Fig. 3 illustrates package caching on a cache server, according to an embodiment of underlying disclosure.
Fig. 4 illustrates package retrieval from the cache server of Fig.3.
Fig. 5 illustrates the pushing of dependent web resources by the cache server of Fig.3.
Fig. 6 illustrates a schematic view on a cache server, according to an embodiment of underlying disclosure.

### Detailed Description of Embodiment(s)

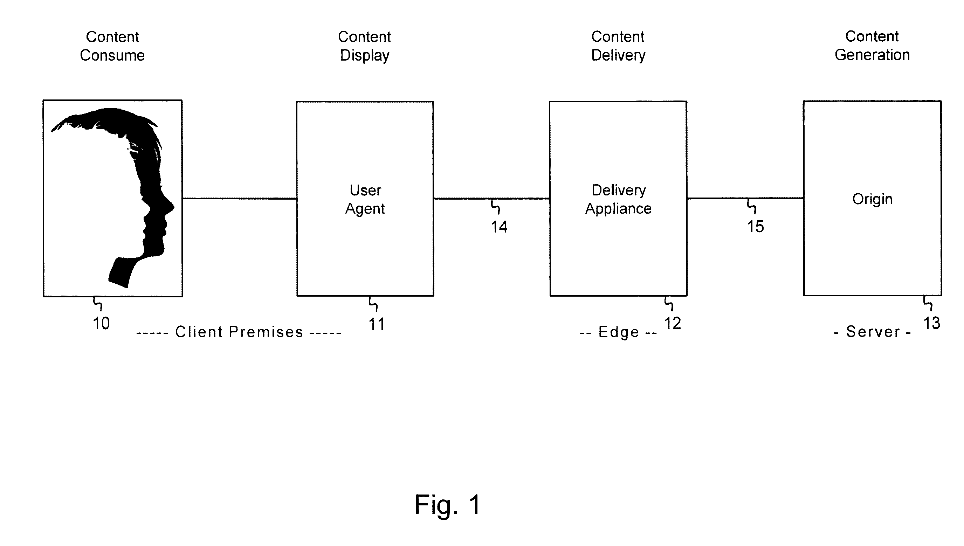

A schematic view on a content delivery chain is shown in Fig. 1, according to an embodiment of underlying disclosure. A delivery appliance or cache server (12) serves and caches web resources stored on the origin web server (13) towards the user agent (11), via communication links (14) and (15). The user agent (11) displays the content to the user (10).

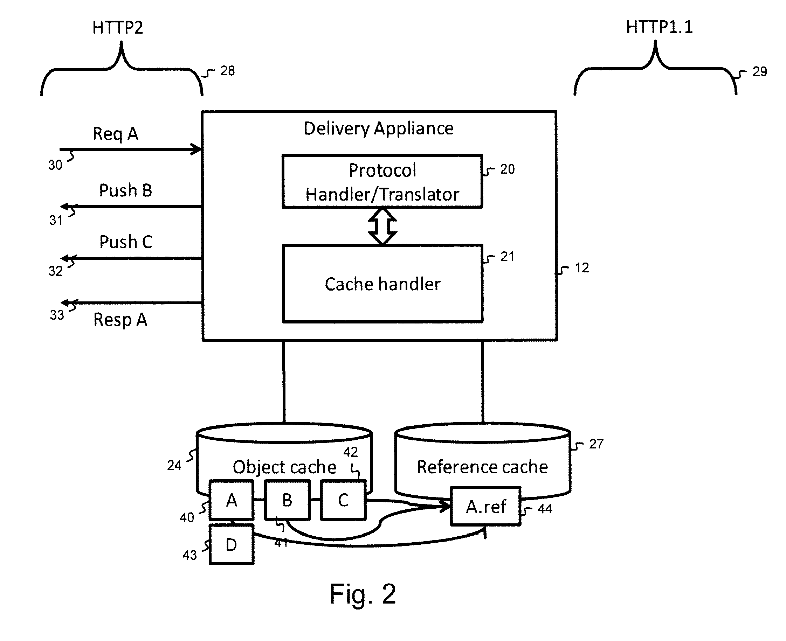

Fig. 2 illustrates a schematic view of a cache server, according to an embodiment of underlying disclosure, which can be applied as the delivery appliance (12) in the content delivery chain of Fig. 1.

The cache server (12) comprises a regular object cache (24), which is configured to store web resources (40-43) such as web resources A, B, C and D. The cache server (12) can deliver these objects via an HTTP2.0 communication link (28) towards user agents (11) of end-users (10). Those objects are retrieved from their origin server (13) via an HTTP communication link (29). It is self-evident that the HTTP protocol version can be variable. In case HTTP1.x is used towards the origin server (13), a protocol translation will be required. However, also HTTP2 may be used towards the origin, in which case the delivery appliance (12) acts as a pure HTTP2 caching proxy.

The cache server (12) comprises the protocol handler/translator (20) which is able to exchange requests with a user agent (11) and a source web server (13). The protocol handler (20) is configured to issue cache requests to the cache handler (21). The cache handler (21) provides web resources from a source web server (13) and received by the protocol handler (20) to the object cache (24), which stores these as cached web resources (40-43).

The web resource reference file A.ref (44) is stored in reference cache (27). This reference file comprises links to linked web resources A, B, C and D in the object cache (24).

For instance, the cache request (30) for web resource A is received by the protocol handler (20), which issues it to the cache handler (21). As the requested web resource A is listed in file A.ref, the cache handler (21) retrieves the cached web resource A from the object cache (24) and provides web resource A to the protocol handler (20) for delivery to the user agent (11) using a response command (in step 33), e.g. "200 OK A".

Also the other linked web resources B and C are identified in the reference file (44) by the cache handler (21). As they are available in the object cache (24), also B and C are retrieved and provided to the protocol handler (20) for delivery to the user agent (11) using a 'push' command (31) and (32).

The cache server (12) further comprises reference cache (27) containing web resource reference files. Those reference files are also regular Web resources and could be stored in the object cache. As such, the object cache and the reference cache can physically be the same entity.

The cache handler (21) can identify and extract information on linked web resources from a web resource received from the protocol handler (20). If such a web resource is encountered, the cache handler (21) is adapted to create and store a web resource reference file into the reference cache (27), comprising links to the linked web resources as from the extracted information, and stores them into the object cache (24).

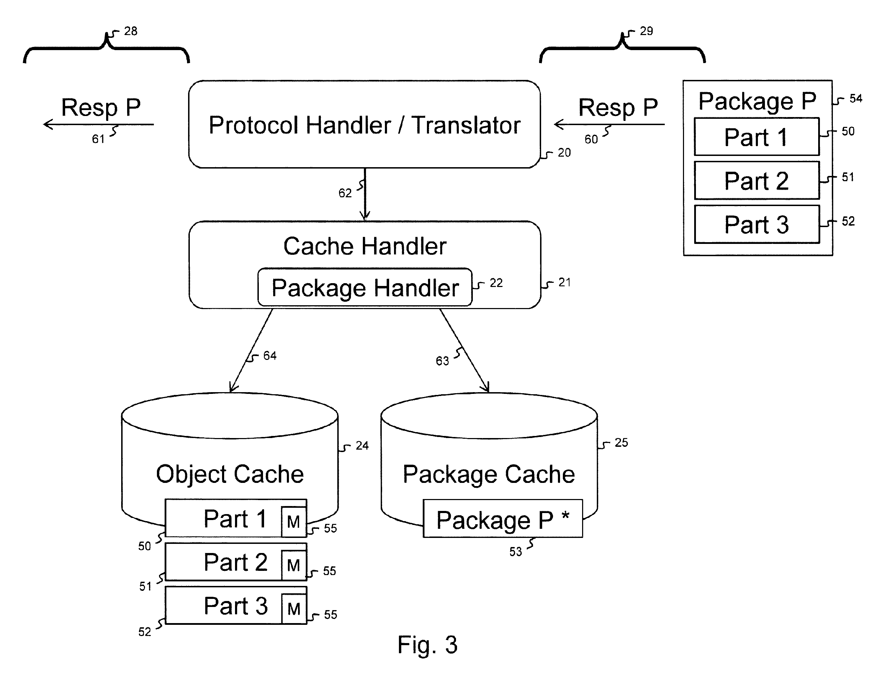

Fig. 3 illustrates a cache server with package caching. Elements with a same reference number as in Fig. 2 have a similar functioning as in the embodiment of Fig. 2. The cache handler (21) comprises a package handler (22) for handling web resources of a web application package type. The package handler (22) is adapted to decompose a web resource of a web application package type into a package description (53) and linked web resources (50-52) in order to cache them in the package cache (25) and object cache (24) respectively. Hence, the web application package description concerns a web resource reference file. A package description contains references to linked web resources in the object cache (24).

When a package file P (54) is received as response (in step 60) from a source server (13), the protocol handler (20) possibly translates and forwards the requested resource towards the end-user in step 61. The protocol handler (20) also informs the cache handler (21) in step 62, in order to store or update the response in its cache (24,25).

The package handler (22) stores the package header P* (53) inside the package cache (25) in step 63. This file or web resource comprises links to the linked web resources (50-52). In step 64 web resources (50-52) can be stored in the object cache (24). The links in the package header can e.g. correspond to the cache location in the object cache (24). By keeping track of these linked web resources, information duplication can be reduced and/or avoided.

The cache handler (21) can detect a web application's package file by inspecting the media type field (e.g. MIME type field) of a received web resource. For example, the MIME type for SPF files is "application/package". In an embodiment, the cache server (12) is adapted to let web application authors or managers pre-install packages in cache (24,25) e.g. via a management interface.

If a package file is encountered, the cache handler (21) invokes the package handler (22). Otherwise, the cache handler (21) just stores or updates the response object as-is, but in case the package handler (22) recognizes the package format type, it will store it differently. Different package file types could be handled, such as Streamable Package Files (SPF), ZIP-files, RAR-files, etc.

In case of an SPF-package file or web resource, the package handler (22) stores the individual parts in the regular object cache (24). These objects get a mark (55) (cfr. letter M in Fig. 3) as being part of a package (54). As such, the cache revocation algorithm can interpret these objects as part of a larger entity and therefore should be treated differently. An example thereto is the removal of all marks (M) when the corresponding package is removed. Optionally, the individual marked web resources can be additionally saved in permanent storage.

Web resources from non-installable web applications that happen to be identical to the marked objects (50-52) are not duplicated. The individual parts (50-52) or web resources that are available in the object cache (24) can be used e.g. when a user is accessing the hosted version of the corresponding web application. Typically, web resources from a downloadable and hosted version are significantly identical. Since a significant part of the web resources will already be available, streaming (via SPF) can start thereby reducing latency. Also, it may be that a user previously accessed the hosted version. In that case, all parts are most probably already present in the object cache. The request for the package in that case can result in the package description (53) being added in the package cache (25).

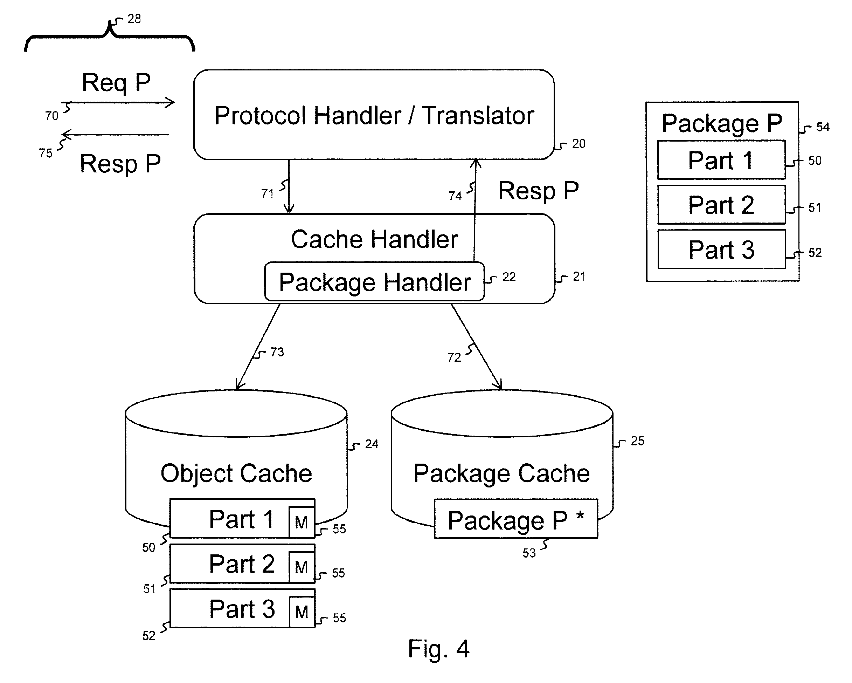

Fig. 4 illustrates the retrieval of a SPF-package P from the cache server of Fig.3. Once a package is cached by the package handler (22), it can be retrieved again. First, a request for package P is received by the protocol handler (20) in step 70. The protocol handler (20) checks the cache handler (21) in step 71, which finds that the package P is indeed available in cache (25) in step 72. SPF-package P is reconstructed by the package handler (22), i.e. the individual parts (50-52) are collected from the object cache (24) in step 73 and the full SPF-file (54) is given back as response (in step 74) to the protocol handler (20).

When a particular web resource from a web application is requested, the cache server (12) will first check the local cache (24), subsequently the semi-permanent storage (25). If the web resource is not found, then the permanent storage can be checked, e.g. by forwarding the request to the origin server (13).

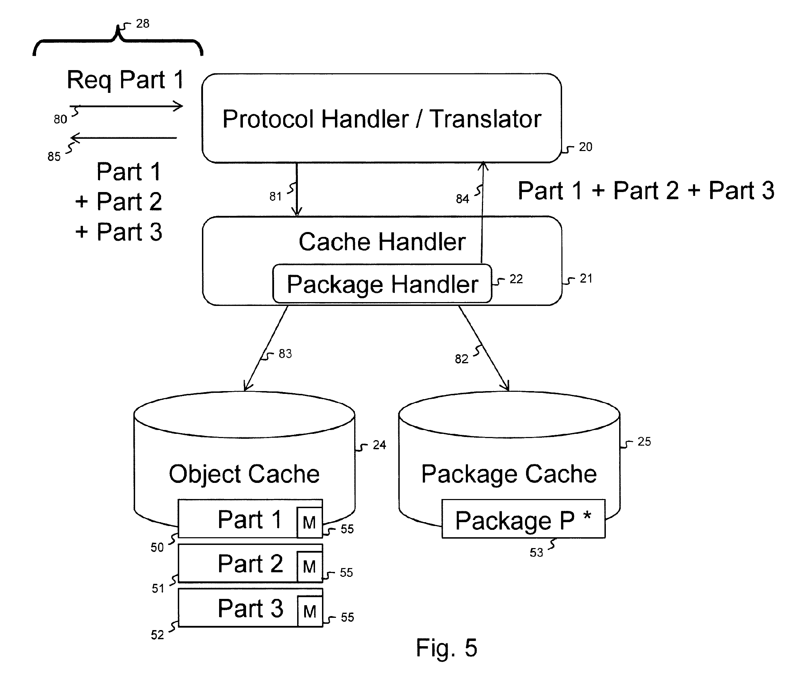

Fig. 5 illustrates the pushing of web resources listed in a SPF-package P stored in the cache server (12) of Fig.3, a user is asked for the hosted version of the web application. Initially (in step 80) a request is made for part 1 (50), which is for instance the main HTML page for the web application. This request is forwarded to the cache handler (21) in step 81. Here, the package handler (22) is consulted to check if part 1 is not part of any cached package (in step 82). As this is the case, the package handler (22) can return part 1, but the dependent part 2 and part 3 as well (in step 84) to the protocol handler (20), which parts are retrieved from the object cache (24) in step 83. The protocol handler (20) can now use this dependent information to construct a HTTP2 response (in step 85), wherein part 2 and part 3 can be sent via a push commando, e.g: preceded by a push promise (HTTP2 push_promise frame). Similarly as to when the package file was requested, the end-user will now effectively send out a single request (i.e. part 1) and receive that part and all dependent web resources (50-52). On receipt of the HTTP push_promises for the individual web resources (50-52), the user agent can selectively refuse Web resources already available in the user agent (11) (cfr. local cache, 'appCache' or permanent storage). As such, duplication of Web resources can be avoided.

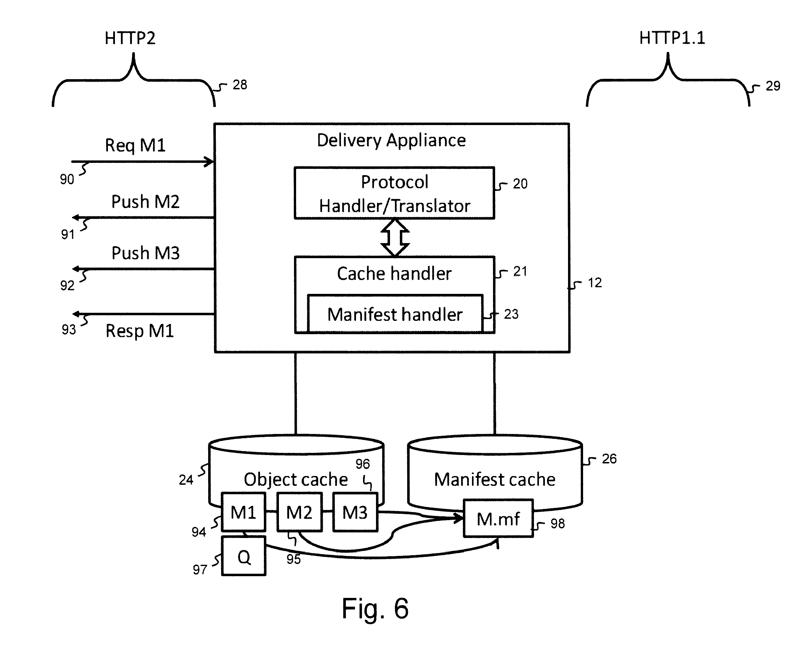

Fig. 6 illustrates a schematic view on a cache server, according an embodiment of the underlying invention. Elements with a same reference number as in Fig. 2 have a similar functioning as in the embodiment of Fig. 2. The cache server could for instance be applied as the delivery appliance (12) in the delivery chain of Fig. 1.

The cache handler (21) comprises a manifest handler (23) which is configured to identify the web application manifest files (98) from web resources received from the protocol handler (20), in order to store these manifest files (98) in the manifest cache (26) of the memory store. Herein the stored web application manifest file concerns a web resource reference file, comprising links to the linked web resources (94-96) in the memory store (24).

The cache server (12) further comprises a manifest cache (26) containing web resource manifest files. Those files are also regular web resources and could be stored in the object cache. As such, the object cache and the manifest cache can physically be the same entity.

For instance, web resources M1, M2, M3 and Q (94-97) are available in object cache (24). Web resources M1, M2 and M3 are referenced to in the manifest file M.mf.

For instance, the cache request (90) for web resource M1 is received by the protocol handler (20), which issues it to the cache handler (21). As the requested web resource M1 is listed in file M.mf, the cache handler (21) retrieves the cached web resource M1 from the object cache (24) and provides M1 to the protocol handler (20) for delivery to the user agent (11) using a response command (in step 93), e.g. "200 OK M1".

Also the other linked web resources M2 and M3 are identified in the manifest file (98) by the cache handler (21). As they are available in the object cache (24), also M2 and M3 are retrieved and provided to the protocol handler (20) for delivery to the user agent (11) using a 'push' command (91) and (92), e.g. HTTP2 "push_promise".

Hence, the cache server (12) can use the information in a cached manifest file (98) to push the listed web resources M1, M2 and M3 to a next user agent (11) that happens to request the same web application already requested by a previous user agent (11). This effectively reduces the latency at the user-agent (11).

The manifest file for application M (e.g. M.mf) is stored in the manifest cache (26). There are several ways that a manifest file can be obtained by the cache server (12). A first option is a configured list of applications for which the cache server will store the manifest file. The use of e.g. an HTML5 manifest file at the cache server could be a (paid) feature on the CDN. A second possibility is via inspection of the media type (e.g. MIME type) of received or cached Web resources. If the media type is e.g. "text/cache-manifest", then the cache server can identify a HTML5 manifest file. A third way is via inspection of the web resources for a web application, e.g. in case a HTML5 page refers or links to a manifest file. Another possibility is via analysis through a headless browser (e.g. phantomJS) and auto-generation of the manifest file.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. It is to be understood that the terms so used are interchangeable under appropriate circumstances and embodiments of the invention are capable of operating according to the present invention in other sequences, or in orientations different from the one(s) described or illustrated above.

## Claims

1. A cache server (12) for serving and caching web resources from one or more source web servers (13) towards one or more user agents (11), said server (12) comprising:
- a protocol handler (20) configured to exchange requests for web resources and responses comprising said web resources, with said user agents (11) and said one or more source web servers (13), and configured to issue a cache request for said web resources to a cache handler (21) upon reception of a request from a user agent (11);
- said cache handler (21) configured to cache said web resources received by said protocol handler (20) from said one or more source web servers (13) into a memory store (24-27) as cached web resources, and configured to retrieve said cached web resources from said memory store (24-27) in response to said request; and
- said memory store (24-27) for storing said cached web resources;
**further characterized in that:**
- said cache handler (21) is further adapted to identify and extract information on linked web resources (40-42,50-52,94-96) from a web resource received from said protocol handler (20), and adapted to generate a web resource reference file (44,53,98), comprising links to said linked web resources (40-42,50-52,94-96);
- said memory store (24-27) is further adapted to store said web resource reference file (44,53,98).

2. A cache server (12) according to claim 1, wherein said cache handler (21) is further adapted to:
- receive a request from said protocol handler (20) for a first linked web resource listed in a first web resource reference file (44,53,98) in said memory store (24-27);
- identify a set of one or more second linked web resources (41-42,51-52,95-96) referred to in said first web resource reference file (44,53,98) and which are available in said memory store (24-27); and
- provide said first linked web resource (40,50,94) and said set of one or more second linked web resources (41-42,51-52,95-96) to said protocol handler (20) for further delivery towards a user agent (11).

3. A cache server (12) according to claim 1, wherein said cache handler (21) is adapted to identify said received web resources as containing information on linked web resources (40-42,50-52,94-96) according to a media type field in said received web resource.

4. A cache server (12) according to claim 1, wherein said cache handler (21) is further adapted to request said protocol handler (20) to retrieve one or more missing web resources in said memory store (24-27) that are referred to by a web resource reference file in said memory store, and is adapted to store said one or more missing web resources in said memory store (24-27).

5. A cache server (12) according to claim 1, wherein said cache handler (21) is further adapted to periodically check a time to live of cached web resources that are referred to by web resource reference files (44,53,98) in said memory store (24-27), is adapted to identify whether updated web resources are available, and is adapted to pre-fetch said updated web resources by said protocol handler (20).

6. A cache server (12) according to claim 1, further comprising an administrator handler adapted to pre-install and/or administer web resource reference files (44,53,98) and linked web resources (40-42,50-52,94-96) in said memory store (24-27).

7. A cache server (12) according to claim 1, wherein said cache handler (21) comprises a manifest handler (23) configured to identify a web application manifest file (98) from web resources received from said protocol handler (20) and configured to store said web application manifest file (98) in said memory store (24-27), wherein said web application manifest file concerns a web resource reference file.

8. A cache server (12) according to claim 7, wherein said manifest handler (23) is adapted to identify said received web resources as web application manifest files (98) according to a media type field in said received web resources.

9. A cache server (12) according to claim 7, wherein said manifest handler (23) is adapted to parse web page web resources in search of links to linked web application manifest files (98), is adapted to retrieve said linked manifest files (98) via said protocol handler (20), and is adapted to store said linked manifest files (98) in said memory store (24-27).

10. A cache server (12) according to claim 1, wherein said cache server (12) further comprises:
- a package handler (22) for handling web resources of a web application package type, wherein said package handler (22) is further adapted to decompose a first web resource of a web application package type into a first web application package description (44,53) and one or more first linked web resources (41-42,50-52) and is further adapted to cache said first wet application package description and said one or more first linked web resources in said memory store (24-27),
wherein said web application package description concerns a web resource reference file.

11. A cache server (12) according to claim 10, wherein said package handler (22) is further adapted to reconstruct a second web resource of a web application package type from a second web application package description and one or more second linked web resources upon a cache request from said protocol handler (20) for said one or more second web resources.

12. A cache server (12) according to claim 10, wherein said cache handler (21) is further adapted to inspect a media type field of a received web resource in order to determine whether said web resource is of said web application package type and whether said web resource is to be handled by said package handler (22).

13. A cache server (12) according to claim 10, wherein said package handler (22) is further adapted to identify one or more third web resources in said cache memory store (24-27) which correspond to a third web application package and which are not linked to a web application package description and wherein said package handler (22) is adapted to create a third web application package description in said cache memory store (24-27) comprising links to said one or more third web resources.

14. Method for serving and caching web resources from one or more source web servers (13) towards user agents (11), said method comprising:
- exchanging requests for web resources and responses comprising said web resources, with said user agents (11) and said one or more source web servers (13);
- issuing cache requests for said web resources upon reception of a cache request from a user agent (11);
- caching said web resources from said one or more source web servers (13) as cached web resources;
- retrieving said cached web resources in response to said cache request;
**characterized in that** the method further comprises:
- identifying and extracting information on linked web resources (40-42,50-52,94-96) from a received web resource;
- storing a web resource reference file (44,53,98) comprising links to linked web resources (40-42,50-52,94-96).

15. Method according to claim 14, wherein the method further comprises:
- receiving a request for a first linked web resource (40,50,94) listed in a stored first web resource reference file (44,53,98);
- identifying a set of one or more second linked web resources (41-42,51-52,95-96) referred to in said first web resource reference file (44,53,98) and which are available; and
- delivering said first linked web resource (40,50,94) and said set of one or more second linked web resources (41-42,51-52,95-96) towards a user agent (11).
